# EUROPEAN PATENT APPLICATION

(11) **EP 3 048 481 A1**
(43) Date of publication of application: **27.07.2016**
(21) Application number: 14846345.8
(22) Date of filing: 03.09.2014
(51) Int. Cl.: G03B 17/38, G03B 15/00, H04M 1/00, H04N 5/225

(54) **ELECTRONIC DEVICE, METHOD FOR CONTROLLING ELECTRONIC DEVICE, AND STORAGE MEDIUM**

(30) Priority: 20.09.2013 JP 2013194995
(71) Applicant: NEC Solution Innovators, Ltd., Tokyo 136-8627 (JP)
(72) Inventor: NAKAO, Yusuke, Tokyo 136-8627 (JP)
(74) Representative: Vossius & Partner Patentanwälte Rechtsanwälte mbB
(86) International application number: PCT/JP2014/004521
(87) International publication number: WO 2015/040809

(57) **Abstract**

This invention makes it such that even in a state in which a user is unable to see a control button provided on a case or a control key displayed on a touchscreen, the user can input an imaging instruction easily. This electronic device (10) has an acceleration sensor (11), a camera unit (12), an imaging-instruction input acceptance unit (13) that uses measurement data obtained from the acceleration sensor (11) to detect the input of a camera-imaging instruction, and an imaging-timing monitoring unit (14) that monitors for the arrival of timing with which to commence camera imaging that is to be performed with prescribed timing after the input of a camera-imaging instruction has been detected. The camera unit (12) performs the camera imaging when the imaging-timing monitoring unit (14) determines that the aforementioned timing with which to commence the camera imaging has arrived.

## Description

### [Technical Field]

The present invention relates to an electronic device, a method for controlling an electronic device, and a storage medium.

### [Background Art]

A mobile terminal provided with a camera function is disclosed in PTL 1. The mobile terminal displays an operation key such as a shutter key on a touch panel display, and performs photographing processing, in response to a touch operation on the operation key by a user.

### [Citation List]

### [Patent Literature]

[PTL 1] Japanese Unexamined Patent Application Publication No. 2013-172282

### [Summary of Invention]

### [Technical Problem]

The present inventor has found a new problem in an electronic device provided with a camera function, as follows.

In an electronic device that accepts an operation on an operation button provided on a case or an operation key displayed on a touch panel display, as an instruction input for photographing, it is difficult to provide the instruction input when these operation objects (an operation button and an operation key) are not able to be visually recognized.

For example, in a case of photographing a subject beyond the crowd by fully stretching out a hand holding an electronic device in a crowd, or photographing a subject in a state that a hand holding an electronic device is inserted into a small interspace, a user is not able to visually recognize a photographic subject when photographing. In such a case, a user needs to guess a position of an operation object by groping, using a positional relation with another part, or the like, and perform an operation on the operation object. Thus, a problem that the user cannot provide instruction input for photographing, or the user misses a shutter chance while locating an operation target, may occur. In other words, in such a situation that such a problem occurs, it is difficult for a user to provide a photographing-instruction input at an intended timing. While it is possible to stretch out a hand or insert a hand into an interspace with a finger placed on an operation target, however, in this case, a state of the hand or the finger needs to be fixed, and this causes a large burden on a user.

A main object of the present invention is to enable a user to easily provide a photographing-instruction input, in a situation that an operation button provided on a case or an operation key displayed on a touch panel display is not able to be visually recognized. Particularly, a main object of the present invention is to enable photographing appropriately at a predetermined timing, in accordance with a photographing-instruction input by the user, in a situation that it is difficult for the user to visually identify an operation target.

### [Solution to Problem]

According to the present invention, an electronic device, including: an acceleration sensor; a camera unit; photographing-instruction input acceptance means for detecting input of an instruction for camera photographing, in accordance with measurement data obtained from the acceleration sensor; and photographing timing monitor means for monitoring arrival of a start timing of the camera photographing that is performed at a predetermined timing after detecting input of the instruction for the camera photographing, is provided. The camera unit performs camera photographing accordingly, when the photographing-timing monitor means determines that the start timing arrives.

According to the present invention, a method for controlling an electronic device including an acceleration sensor and a camera unit, by a computer of the electronic device is provided. The method includes: detecting input of an instruction for camera photographing, in accordance with measurement data obtained from the acceleration sensor; monitoring arrival of a start timing of the camera photographing performed at a predetermined timing after detecting input of the instruction for the camera photographing; and performing camera photographing accordingly, on determining that the start timing arrives, in the monitoring arrival of the start timing.

According to the present invention, a computer-readable storage medium storing a program for a computer of an electronic device including an acceleration sensor and a camera unit is provided. The program causing the computer to execute: processing of detecting input of an instruction for camera photographing, in accordance with measurement data obtained from the acceleration sensor; processing of monitoring arrival of a start timing of the camera photographing performed at a predetermined timing after detecting input of the instruction for the camera photographing; and processing of performing camera photographing accordingly on determining that the start timing arrives, in the processing of monitoring arrival of the start timing.

### [Advantageous Effects of Invention]

The present invention enables a user to easily provide a photographing-instruction input in a situation that it is difficult for the user to visually recognize an operation button provided on a case or an operation key displayed on a touch panel display.

### [Brief Description of Drawings]

[Fig. 1] Fig. 1 is a diagram conceptually illustrating an example of a hardware configuration of an electronic device according to an exemplary embodiment of the present invention.
[Fig. 2] Fig. 2 is a diagram illustrating an example of a functional block diagram of the electronic device according to the exemplary embodiment of the present invention.
[Fig. 3] Fig. 3 is a diagram schematically illustrating an example of a user operation of inputting an instruction for camera photographing to the electronic device according to the exemplary embodiment of the present invention.
[Fig. 4] Fig. 4 is a diagram schematically illustrating an example of a user operation of inputting an instruction for camera photographing to the electronic device according to the exemplary embodiment of the present invention.
[Fig. 5] Fig. 5 is a flowchart illustrating an example of processing in the electronic device according to the exemplary embodiment of the present invention.
[Fig. 6] Fig. 6 is a diagram schematically illustrating an example of time-series data of acceleration in a predetermined direction.
[Fig. 7] Fig. 7 is a diagram schematically illustrating an example of time-series data of acceleration in a predetermined direction.
[Fig. 8] Fig. 8 is a diagram schematically illustrating an example of time-series data of acceleration in a predetermined direction.
[Fig. 9] Fig. 9 is a diagram schematically illustrating an example of time-series data of acceleration in a predetermined direction.
[Fig. 10] Fig. 10 is a diagram schematically illustrating an example of time-series data of acceleration in a predetermined direction.

### [Description of Embodiments]

First, an example of a hardware configuration of an electronic device according to the present exemplary embodiment will be described.

The electronic device according to the present exemplary embodiment is a portable apparatus. Various units included in the electronic device according to the present exemplary embodiment are implemented by any combination of hardware and software, mainly including a Central Processing Unit (CPU), a memory, a program loaded into a memory, a storage unit such as a hard disk storing the program, and a network connection interface, in any computer. The program described above includes a program downloaded from a storage medium such as a compact disc (CD), a server connected to the Internet, and the like, in addition to a program stored in a memory at shipment of the apparatus. It should be understood by those skilled in the art that various modifications can be made for the implementation method and the apparatus.

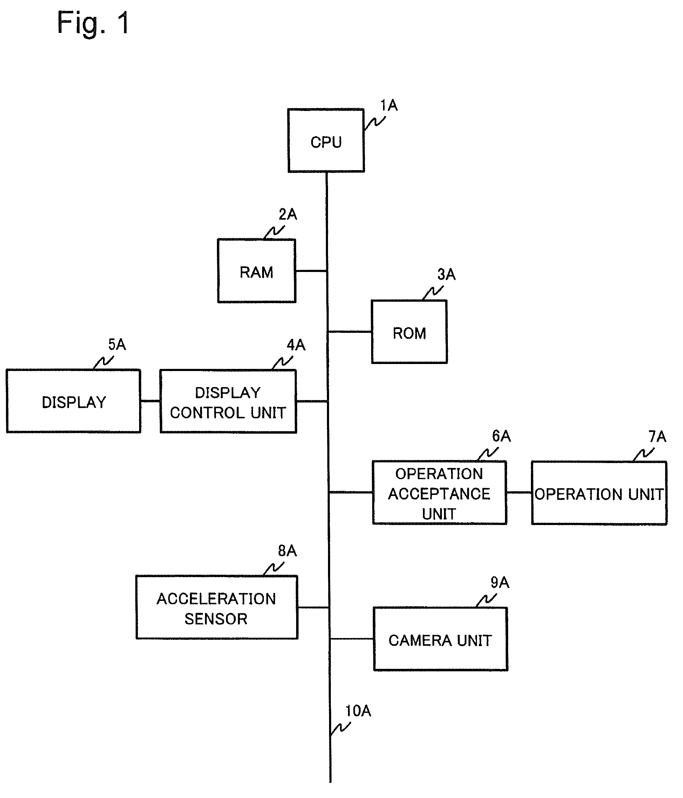

Fig. 1 is a diagram conceptually illustrating an example of a hardware configuration of the electronic device according to the present exemplary embodiment. As illustrated, an apparatus according to the present exemplary embodiment includes, for example, a CPU 1 A, a Random Access Memory (RAM) 2A, a Read Only Memory (ROM) 3A, a display control unit 4A, a display 5A, an operation acceptance unit 6A, an operation unit 7A, an acceleration sensor 8A, a camera unit 9A, and the like, interconnected by a bus 10A. Although not being illustrated, the apparatus according to the present exemplary embodiment may include an additional element such as an input/output interface (I/F) connected to an external device by wire, a communication unit for communicating with an external device by at least one of a wired and wireless communication method, a microphone, a speaker, or an auxiliary storage apparatus.

The CPU 1A controls an entire computer in the electronic device along with various elements. The ROM 3A includes a storage area storing a program for operating the computer, various application programs, and various setting data used when those programs operate. The RAM 2A includes a storage area temporarily storing data, such as a work area for operation of the programs.

The display 5A includes a display apparatus (such as a light emitting diode (LED) indicator, a liquid crystal display, and an organic electro luminescence (EL) display). The display 5A may be a touch panel display integrated with a touch pad. The display control unit 4A reads data stored in a video RAM (VRAM), performs a predetermined process on the read data, and, subsequently, transmits the data to the display 5A for various kinds of screen display. The operation acceptance unit 6A accepts various operations via the operation unit 7A. The operation unit 7A includes an operation key, an operation button, a switch, a jog dial, a touch panel display, and the like.

The acceleration sensor 8A measures acceleration in a predetermined axial direction. The acceleration sensor 8A may be any one of a uniaxial sensor measuring acceleration in a uniaxial direction, a biaxial sensor measuring acceleration in orthogonal biaxial directions, and a triaxial sensor measuring acceleration in orthogonal triaxial directions. Further, the acceleration sensor 8A is not limited to the description above and may be a sensor measuring acceleration in a rotative direction (turning direction) with respect to any axis. The camera unit 9A is configured to photograph and store at least a still image.

The present exemplary embodiment will be described below. A functional block diagram used in the following description of the exemplary embodiment illustrates blocks representing functional elements instead of a configuration on hardware. Although the apparatus is described to be implemented on one device in the drawings, the implementation method is not limited thereto. In other words, a configuration capable of implementing the present exemplary embodiment may be a physically separated configuration or a logically separated configuration.

First, an overview of the present exemplary embodiment will be described. The present inventor has examined an electronic device accepting a photographing-instruction input by use of an acceleration sensor. Specifically, the present inventor has examined an electronic device accepting an operation of tapping a finger on any location other than an operation object (an operation button or a touch panel display) of the electronic device, or an operation of shaking the electronic device, as a photographing-instruction input.

In the case of such an electronic device described above, a user is able to easily provide a photographing-instruction input even when the user is not able to visually recognize an operation target (an operation button or a touch panel display). However, in the case of the electronic device described above, the electronic device is moved by an operation of the photographing-instruction input (an operation of tapping the electronic device or an operation of shaking the electronic device). Consequently, when a photographing process is performed by using the instruction input as a trigger, the photographing process is performed while the electronic device is in motion, and a so-called "blurring" problem mayoccur. The electronic device according to the present exemplary embodiment is an electronic device accepting a photographing-instruction input by use of an acceleration sensor and provides solutions for the problem. A configuration of the electronic device according to the present exemplary embodiment will be described in detail below.

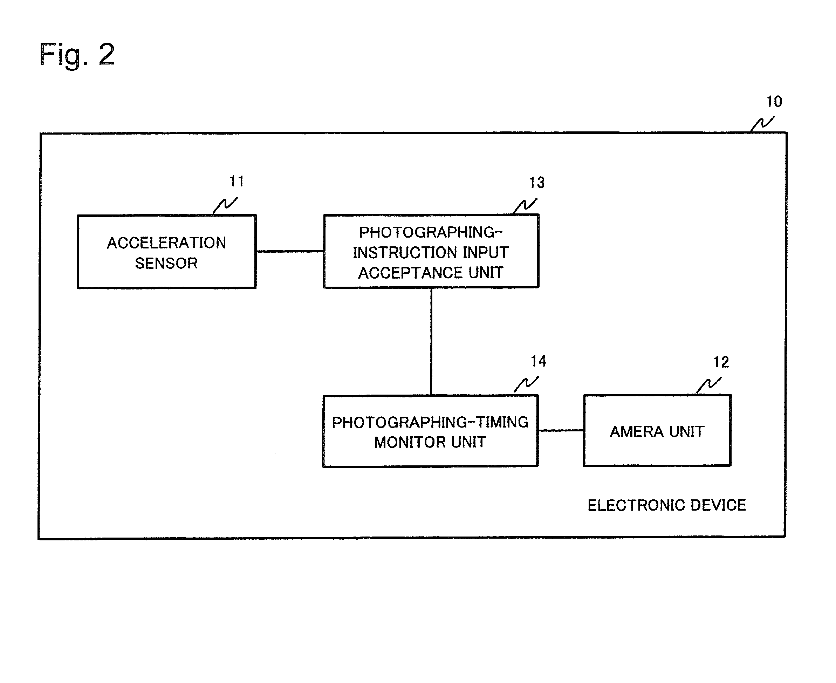

Fig. 2 illustrates an example of a functional block diagram of an electronic device 10 according to the present exemplary embodiment. As illustrated, the electronic device 10 includes an acceleration sensor 11, a camera unit 12, a photographing-instruction input acceptance unit 13, and a photographing-timing monitor unit 14.

The acceleration sensor 11 measures acceleration in a predetermined axial direction. The acceleration sensor 11 may be any one of a uniaxial sensor measuring acceleration in one measurement axis direction, a biaxial sensor measuring acceleration in two measurement axis directions, or a triaxial sensor measuring acceleration in three measurement axis directions. A configuration of the acceleration sensor 11 is not limited to particular technology, and any technology may be adopted. When the acceleration sensor 11 measures acceleration in biaxial or triaxial directions, acceleration in another direction can be further calculated by use of these measured data. Time-series data (records) representing acceleration in directions different from one another are synchronized in certain timing by use of time information. In other words, a plurality of time-series data (i.e. a plurality of records) representing acceleration in directions different from one another are synchronized in accordance with time when time-series data representing acceleration in each direction are measured. More specifically, for example, each set of time-series data has time information data representing time when acceleration in each direction is measured, associated with data representing acceleration measured at the time. Thus, each set of time-series data can be synchronized with another set of time-series data, in accordance with time information data. The time information data described above may be data representing specific time (or a moment). Further, the time information described above may be data representing a specific timing (such as an operation clock of the CPU (1A) or elapsed time from a start of processing in the electronic device 10) in the electronic device 10. In this case, time-series data (records) representing acceleration in directions different from one another are synchronized in accordance with time information data held by each set of the time-series data. More specifically, for example, a plurality of time-series data representing acceleration in directions different from one another may be synchronized by extracting time-series data having same time information data (data values) from the plurality of time-series.

The camera unit 12 is configured to photograph at least a still image and to store the image.

The photographing-instruction input acceptance unit 13 detects input of a photographing-instruction for camera, in accordance with measurement data (time-series data of acceleration in a measurement axis direction) obtained from the acceleration sensor 11. For example, the photographing-instruction input acceptance unit 13 obtains measurement data from the acceleration sensor 11 when the electronic device 10 is in a camera mode activating a camera function, and more specifically, when the electronic device 10 is in a photographing mode included in a camera mode, the photographing mode enabling to accept a photographing-instruction input. Then, the photographing-instruction input acceptance unit 13 performs processing of detecting input of the photographing-instruction for the camera. The photographing-instruction input acceptance unit 13 does not need to perform the detection processing in case of another mode. The photographing-instruction input acceptance unit 13 obtains measurement data from the acceleration sensor 11 in real time and detects input of the photographing-instruction for the camera.

The photographing-instruction input acceptance unit 13 may detect a first acceleration pattern including at least a pattern in which acceleration in a predetermined direction becomes greater than or equal to a predetermined first value, as the photographing-instruction for the camera. The first value is not limited to a specific value and is appropriately selectable. The photographing-instruction input acceptance unit 13 may also detect the first acceleration pattern including at least a pattern in which acceleration in the predetermined direction exceeds the first value, as a camera photographing-instruction.

For example, the photographing-instruction input acceptance unit 13 generates time-series data of acceleration in a predetermined direction by use of measurement data. Then, the photographing-instruction input acceptance unit 13 monitors whether or not the first acceleration pattern is included in the time-series data of acceleration in the predetermined direction.

As described above, the acceleration sensor 11 may be a sensor capable of measuring acceleration in a plurality of measurement axis directions. Consequently, the aforementioned predetermined direction may be direction appropriately selected among a plurality of directions. For example, the predetermined direction may be a direction in which maximum acceleration is measured, a direction in which minimum acceleration is measured, or a direction in which acceleration greater than or equal to the first value is measured. Further, the predetermined direction may be the measurement direction of the acceleration sensor 11 that is a uniaxial sensor. The predetermined direction may be one of the measurement directions of the acceleration sensor 11 that is a biaxial sensor (the predetermined direction may be a direction in which high acceleration is measured or a direction in which low acceleration is measured). Further, the predetermined direction may be one of the measurement directions of the acceleration sensor 11 that is a triaxial sensor (the predetermined direction may be a direction in which maximum acceleration is measured, a direction in which minimum acceleration is measured, or a direction in which intermediate acceleration is measured).

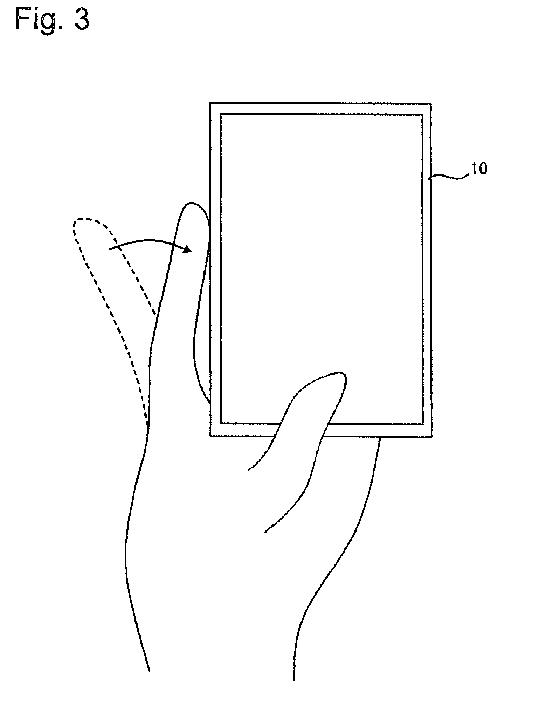

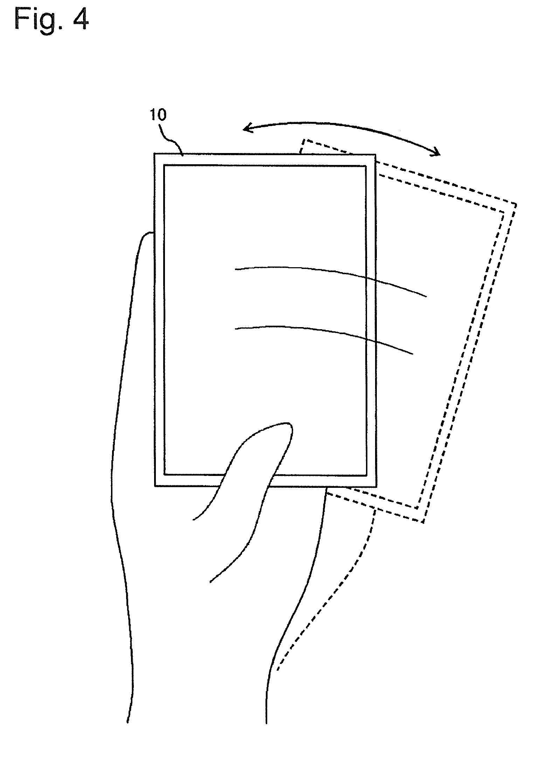

The first acceleration pattern may be, for example, a pattern in which acceleration in the predetermined direction becomes greater than or equal to the first value at least once. As an example of a user operation for inputting such a first acceleration pattern, an operation of tapping a finger on a predetermined location of the electronic device 10 as illustrated in Fig. 3, or an operation of shaking the electronic device 10 in a predetermined direction as illustrated in Fig. 4, can be conceivable.

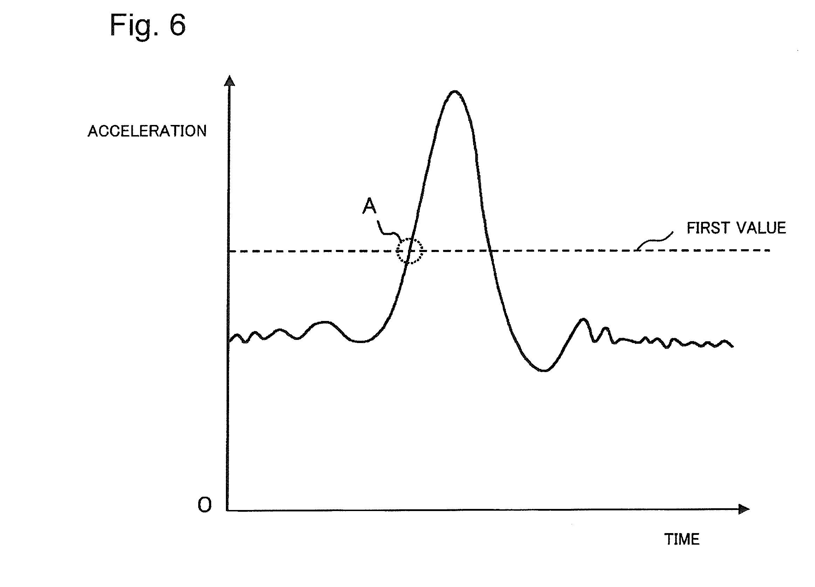

For example, assume that the photographing-instruction input acceptance unit 13 generates data illustrated in Fig. 6 as time-series data of acceleration in a predetermined direction. In this case, the photographing-instruction input acceptance unit 13 determines that the first acceleration pattern occurs (i.e. a camera photographing-instruction is input) at a time point denoted as "A" illustrated in Fig. 6 (hereinafter referred to as the "time point A"), when acceleration in the predetermined direction becomes greater than or equal to the first value once.

Another example of the first acceleration pattern may be a pattern in which acceleration in a predetermined direction becomes greater than or equal to the first value, then becomes less than the first value, and subsequently becomes greater than or equal to the first value. Such a first acceleration pattern may further include a condition that a time interval between the time, at which the acceleration becomes greater than or equal to the first value for the first time, and the time, at which the acceleration becomes greater than or equal to the first value for the second time, is less than or equal to a predetermined time. Such a predetermined time is not limited to a specific value and may be an appropriately selectable setting value. As an example of a user operation for inputting such a first acceleration pattern, an operation of repeating twice the operation of tapping a finger on a predetermined location of the electronic device 10 as illustrated in Fig. 3, or an operation of repeating twice the operation of shaking the electronic device 10 in a predetermined direction as illustrated in Fig. 4, can be conceivable.

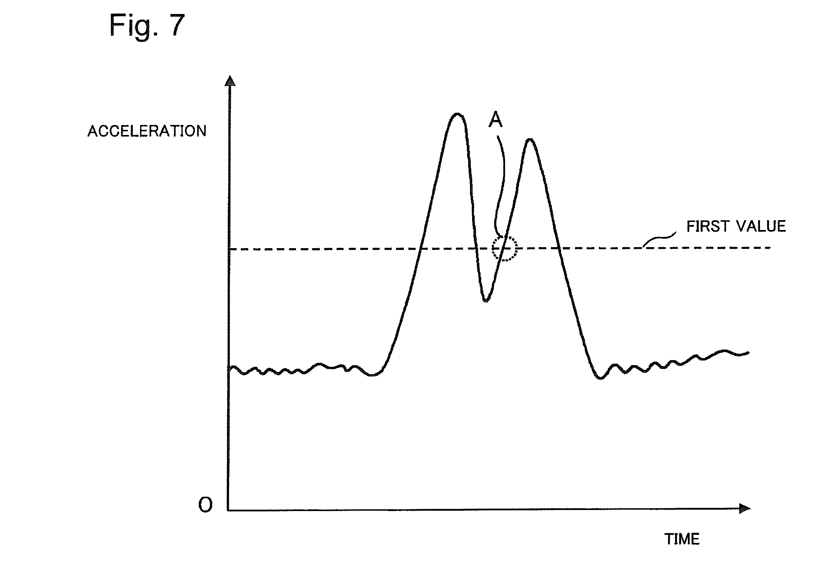

For example, assume that the photographing-instruction input acceptance unit 13 generates data illustrated in Fig. 7 as time-series data of acceleration in a predetermined direction. In this case, the photographing-instruction input acceptance unit 13 determines that the first acceleration pattern occurs at a time point A (illustrated in Fig. 7) when acceleration in the predetermined direction becomes greater than or equal to the first value, after acceleration in the predetermined direction has become greater than or equal to the first value and, and then has become less than the first value. In other words, the photographing-instruction input acceptance unit 13 determines that a camera photographing-instruction input is provided at the time point A illustrated in Fig. 7.

As exemplified in each of the aforementioned drawings, the first acceleration pattern is also considered as, for example, a pattern in which acceleration in a predetermined direction increases to at least the aforementioned first value. The exemplification above is an example and the first acceleration pattern may include another pattern. The photographing-instruction input acceptance unit 13 holds data representing the first acceleration pattern in advance, and is able to execute the aforementioned processing by use of the data.

The photographing-timing monitor unit 14 monitors arrival of a start timing of camera photographing performed at a predetermined timing after detection of a camera photographing-instruction input. In other words, in the case of the present exemplary embodiment, a predetermined timing, after detection of a camera photographing-instruction input by the photographing-instruction input acceptance unit 13, is the start timing of camera photographing. That is to say, the photographing-timing monitor unit 14 monitors the start timing of camera photographing that is a predetermined timing after detection of the camera photographing-instruction input by the photographing-instruction input acceptance unit 13. When the photographing-timing monitor unit 14 determines that the start timing arrives, the camera unit 12 performs camera photographing, accordingly. Specifically, when the photographing-timing monitor unit 14 determines that the start timing arrives, the camera unit 12 may generate still image data (storable data) of an image that is displayed on the display at the time point, accordingly. Also, the camera unit 12 may generate still image data of a captured image of an area that can be photographed by the camera unit 12, whether or not the image is displayed on the display.

The photographing-timing monitor unit 14 is capable of detecting arrival of the start timing of camera photographing, in accordance with measurement data obtained from the acceleration sensor 11.

For example, the photographing-timing monitor unit 14 is able to detect, as arrival of the start timing, a second acceleration pattern including at least a pattern in which acceleration in a predetermined direction becomes less than or equal to a predetermined second value. Such a second value is not limited to a specific value and may be appropriately selectable. Such a predetermined direction may be a direction appropriately selected from a plurality of directions, similarly to the aforementioned predetermined direction. In this case, the predetermined direction of the first acceleration pattern and the predetermined direction of the second acceleration pattern may be a same direction or different directions.

The photographing-timing monitor unit 14 may also detect the second acceleration pattern including at least a pattern in which acceleration in every direction (predetermined direction) becomes less than or equal to the second value, as arrival of the start timing.

For example, the photographing-timing monitor unit 14 obtains measurement data from the acceleration sensor 11 in real time. Then, the photographing-timing monitor unit 14 generates time-series data of acceleration in the predetermined direction by use of the obtained measurement data. Subsequently, the photographing-timing monitor unit 14 monitors whether or not the second acceleration pattern is included in the time-series data of acceleration in the predetermined direction.

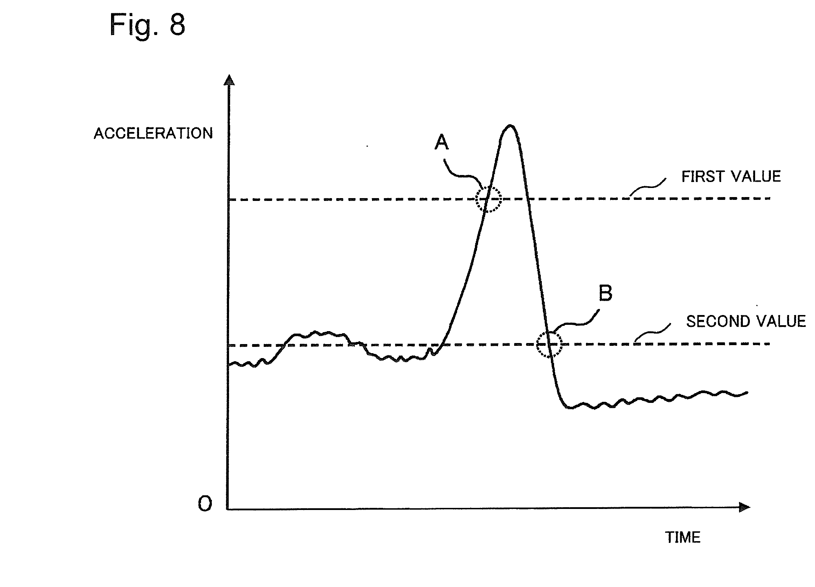

For example, assume that the photographing-timing monitor unit 14 generates data illustrated in Fig. 8 as time-series data of acceleration in a predetermined direction. In this example, a time point A (illustrated in Fig. 8), that is a time point when acceleration in the predetermined direction becomes greater than or equal to the first value once, is a time point detected by the photographing-instruction input acceptance unit 13, as a time point when a camera photographing-instruction input is provided. In case that the second acceleration pattern is a pattern in which acceleration in the predetermined direction once becomes less than or equal to the second value, the photographing-timing monitor unit 14 is able to detect a time point denoted as B (illustrated in Fig. 8) (hereinafter referred to as the time point B), as arrival of the start timing.

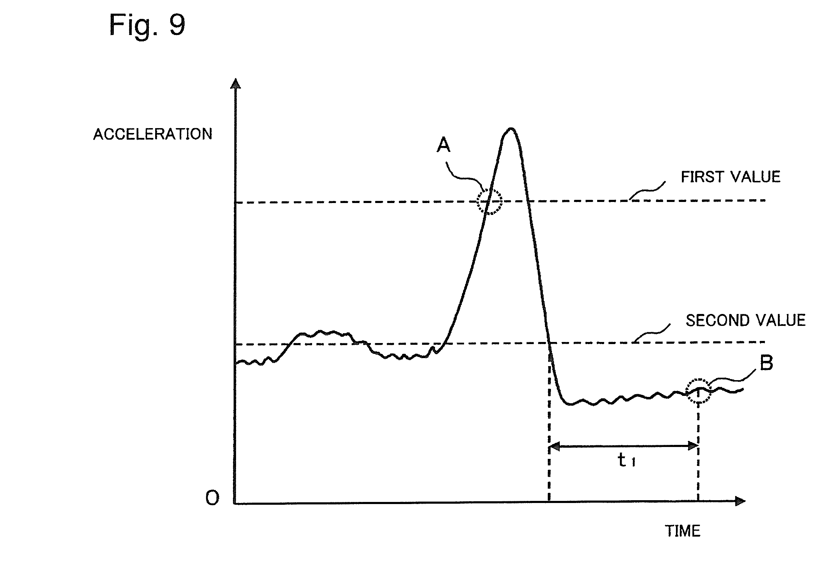

Another example of the second acceleration pattern may include a pattern in which a state, that acceleration in a predetermined direction is less than or equal to a predetermined second value, continues for a predetermined time or more. Such a predetermined time is not limited to a specific value and may be an appropriately selectable set value. For example, assume that the photographing-timing monitor unit 14 obtains data illustrated in Fig. 9 as time-series data of acceleration in a predetermined direction. In this example, a time point A (illustrated in Fig. 9) that is a time point when acceleration in the predetermined direction becomes greater than or equal to the first value once, is a time point detected by the photographing-instruction input acceptance unit 13, as a time point when a camera photographing-instruction input is provided. Further, in this example, the photographing-timing monitor unit 14 is able to detect a time point B (illustrated in Fig. 9), that is a time point when a state that acceleration is less than or equal to the second value continues for a predetermined time t1, as arrival of the start timing. As exemplified in each of the aforementioned drawings, the second acceleration pattern is also considered as, for example, a pattern in which acceleration in a predetermined direction decreases to at least the aforementioned second value.

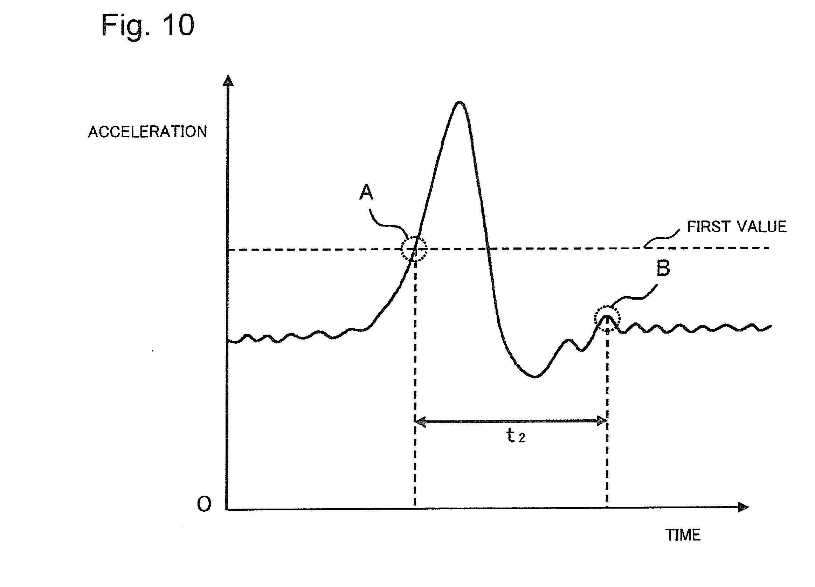

The photographing-timing monitor unit 14 is able to detect arrival of the start timing of camera photographing without using measurement data obtained from the acceleration sensor 11. For example, the photographing-timing monitor unit 14 may detect, as arrival of the start timing, the timing after elapse of a predetermined time after detection of the camera photographing-instruction input. Such a predetermined time may be set to, for example, two seconds, but is not limited to this value, and the predetermined time may be an appropriately selectable set value. For example, assume that the photographing-instruction input acceptance unit 13 detects a time point A (illustrated in Fig. 10) as a time point when a camera photographing-instruction input is provided, in accordance with time-series data of acceleration in a predetermined direction illustrated in Fig. 10. In this case, the photographing-timing monitor unit 14 is able to detect a time point B, that is a time point after elapse of a predetermined time t2 from the time point A, as arrival of the start timing.

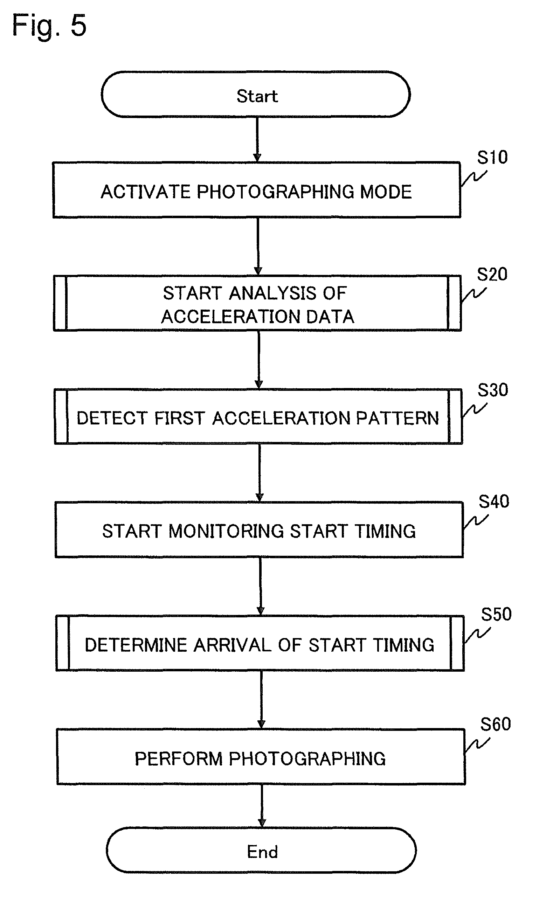

Next, an example of a flow of processes in the electronic device 10 according to the present exemplary embodiment will be described by use of a flowchart in Fig. 5.

When a photographing mode is activated in response to a user operation (S10), an image of a photographic subject (a preview) is displayed on the display. Further, when the photographing mode is activated, the photographing-instruction input acceptance unit 13 obtains acceleration data from the acceleration sensor 11, and starts analysis of the obtained acceleration data (S20). For example, while being in the photographing mode, the photographing-instruction input acceptance unit 13 generates time-series data of acceleration in a predetermined direction by use of measurement data from the acceleration sensor 11. Then, the photographing-instruction input acceptance unit 13 continuously monitors whether or not the first acceleration pattern is included in the time-series data.

As a result of the analysis described above, the photographing-instruction input acceptance unit 13 detects the first acceleration pattern (S30). In this case, the photographing-timing monitor unit 14 starts monitoring of arrival of the start timing of camera photographing, that is performed at a predetermined timing after detection of a camera photographing-instruction input (S40).

As a result of the monitoring described above, the photographing-instruction input acceptance unit 13 determines that the start timing arrives (S50). In this case, the camera unit 12 generates still image data of an image displayed on the display at that time point, accordingly (S60). The camera unit 12 may generate still image data of a captured image of an area that can be photographed by the camera unit 12, whether or not the image is displayed on the display.

Next, advantageous effects according to the present exemplary embodiment will be described.

The electronic device 10 according to the present exemplary embodiment accepts a photographing-instruction input by use of the acceleration sensor 11. For example, the electronic device 10 is able to accept an operation of tapping a finger on any location of the electronic device 10 or an operation of shaking the electronic device 10 as the photographing-instruction input. Thus, a user is able to easily provide the photographing-instruction input, even in the situation that the user is not able to visually recognize an operation target (an operation button or a touch panel display). In other words, the electronic device 10 according to the present exemplary embodiment is able to perform satisfactory photographing at a predetermined timing, in accordance with a photographing-instruction input by the user.

Further, the electronic device 10 according to the present exemplary embodiment performs camera photographing at a predetermined timing after detection of the camera photographing-instruction input, instead of performing camera photographing immediately after detection of the camera photographing-instruction input by using the detection as a trigger. When accepting an operation of tapping the electronic device 10 or an operation of shaking the electronic device 10 as the photographing-instruction input, the electronic device 10 moves by the operation of the instruction input. Then, when camera photographing is performed immediately after detection of an instruction input by using the detection as a trigger, photographing is performed while the electronic device 10 is in motion and a so-called "blurring" problem can occur. The electronic device 10 according to the present exemplary embodiment performs camera photographing at a predetermined timing after detection of the camera photographing-instruction input, instead of performing camera photographing immediately after detection of the camera photographing-instruction input using the detection as a trigger. Therefore, the electronic device 10 according to the present exemplary embodiment is able to mitigate such problem.

Further, the electronic device 10 according to the present exemplary embodiment detects a second acceleration pattern (a pattern including at least a pattern in which acceleration in a predetermined direction becomes less than or equal to a predetermined second value) as arrival of a start timing. For example, when the pattern in which the state that acceleration in a predetermined direction is less than or equal to a predetermined second value continues for a predetermined time or more, is adopted as the second acceleration pattern, photographing can be performed after the acceleration in the predetermined direction of the electronic device 10 converges to the second value or less. Consequently, the electronic device 10 according to the present exemplary embodiment is able to mitigate the so-called "blurring" problem.

Further, the electronic device 10 according to the present exemplary embodiment is capable of detecting a timing after elapse of a predetermined time after detection of a camera photographing-instruction input, as arrival of the start timing. It is widely known that a "blurring" problem occurs when the electronic device 10 is in motion when photographing. Thus, a user attempts to reduce movement of the electronic device 10 when photographing. However, in spite of such an attempt by the user, it is likely that the electronic device 10 is in motion immediately after a camera photographing-instruction input by the aforementioned user operation. However, the movement of the electronic device 10 may become smaller after elapse of a predetermined time. Therefore, the present exemplary embodiment is able to mitigate a so-called "blurring" problem by performing photographing at the timing after elapse of a predetermined time after detection of a camera photographing-instruction input.

Examples of reference exemplary embodiments will be described as Supplemental Notes below. The aforementioned exemplary embodiments and modifications made thereto may also be described in whole or part as the following Supplemental Notes. However, the present invention exemplified in the aforementioned exemplary embodiments and modifications made thereto, is not limited to the following.

### (Supplemental Note 1)

An electronic device including:
an acceleration sensor;
a camera unit;
photographing-instruction input acceptance means for detecting input of an instruction for camera photographing, in accordance with measurement data obtained from the acceleration sensor; and
photographing-timing monitor means for monitoring arrival of a start timing of the camera photographing that is performed at a predetermined timing after detecting input of the instruction for the camera photographing, wherein
the camera unit performs camera photographing accordingly, when the photographing-timing monitor means determines that the start timing arrives.

### (Supplemental Note 2)

The electronic device according to Supplemental Note 1, wherein
the photographing-instruction input acceptance means detects a first acceleration pattern, including at least a pattern in which acceleration in a predetermined direction exceeds a first value, as the instruction for the camera photographing.

### (Supplemental Note 3)

The electronic device according to Supplemental Note 2, wherein
the photographing-timing monitor means detects arrival of the start timing of the camera photographing, in accordance with measurement data obtained from the acceleration sensor.

### (Supplemental Note 4)

The electronic device according to Supplemental Note 3, wherein the photographing-timing monitor means detects a second acceleration pattern, including at least a pattern in which acceleration in a predetermined direction becomes less than or equal to a second value, as arrival of the start timing.

### (Supplemental Note 5)

The electronic device according to Supplemental Note 4, wherein
the photographing-timing monitor means detects the second acceleration pattern, including at least a pattern in which acceleration in every direction becomes less than or equal to the second value, as arrival of the start timing.

### (Supplemental Note 6)

The electronic device according to Supplemental Note 2, wherein
the photographing-timing monitor means detects a timing after elapse of a predetermined time from detecting input of the instruction for the camera photographing, as arrival of the start timing.

### (Supplemental Note 7)

A method for controlling an electronic device including an acceleration sensor and a camera unit, by a computer of the electronic device, the method including:
detecting, by the computer, input of an instruction for camera photographing, in accordance with measurement data obtained from the acceleration sensor;
monitoring, by the computer, arrival of a start timing of the camera photographing performed at a predetermined timing after detecting input of the instruction for the camera photographing; and
performing, by the computer, camera photographing accordingly, on determining that the start timing arrives, in the monitoring arrival of the start timing.

### (Supplemental Note 7-2)

The method for controlling an electronic device according to Supplemental Note 7, wherein

In the detecting input of a instruction for camera photographing, the computer detects a first acceleration pattern, including at least a pattern in which acceleration in a predetermined direction exceeds a first value, as the instruction for the camera photographing.

### (Supplemental Note 7-3)

The method for controlling an electronic device according to Supplemental Note 7-2, wherein

In the monitoring arrival of a start timing of the camera photographing, the computer detects arrival of the start timing of the camera photographing, in accordance with measurement data obtained from the acceleration sensor.

### (Supplemental Note 7-4)

The method for controlling an electronic device according to Supplemental Note 7-3, wherein

In the monitoring arrival of a start timing of the camera photographing, the computer detects a second acceleration pattern, including at least a pattern in which acceleration in a predetermined direction becomes less than or equal to a second value, as arrival of the start timing.

### (Supplemental Note 7-5)

The method for controlling an electronic device according to Supplemental Note 7-4, wherein

In the monitoring arrival of a start timing of the camera photographing, the computer detects the second acceleration pattern, including at least a pattern in which acceleration in every direction becomes less than or equal to the second value, as arrival of the start timing.

### (Supplemental Note 7-6)

The method for controlling an electronic device according to Supplemental Note 7-2, wherein

In the monitoring arrival of a start timing of the camera photographing, the computer detects a timing after elapse of a predetermined time from detecting input of the instruction for the camera photographing, as arrival of the start timing.

### (Supplemental Note 8)

A computer program for a computer of an electronic device including an acceleration sensor and a camera unit, the program allowing the computer to function as:
photographing-instruction input acceptance means for detecting input of an instruction for camera photographing, in accordance with measurement data obtained from the acceleration sensor;
photographing-timing monitor means for monitoring arrival of a start timing of the camera photographing that is performed at a predetermined timing after detecting input of the instruction for the camera photographing; and
photographing means for performing camera photographing accordingly, when the photographing-timing monitor means determines that the start timing arrives.

### (Supplemental Note 8-2)

The computer program according to Supplemental Note 8, allowing the computer to function as the photographing-instruction input acceptance means, wherein the photographing-instruction input acceptance means detects a first acceleration pattern, including at least a pattern in which acceleration in a predetermined direction exceeds a first value, as the instruction for the camera photographing.

### (Supplemental Note 8-3)

The computer program according to Supplemental Note 8-2, allowing the computer to function as the photographing-timing monitor means, wherein the photographing-timing monitor means detects arrival of the start timing of the camera photographing, in accordance with measurement data obtained from the acceleration sensor.

### (Supplemental Note 8-4)

The computer program according to Supplemental Note 8-3, allowing the computer to function as the photographing-timing monitor means, wherein the photographing-timing monitor means detects a second acceleration pattern, including at least a pattern in which acceleration in a predetermined direction becomes less than or equal to a second value, as arrival of the start timing.

### (Supplemental Note 8-5)

The computer program according to Supplemental Note 8-4, allowing the computer to function as the photographing-timing monitor means, wherein the photographing-timing monitor means detects the second acceleration pattern, including at least a pattern in which acceleration in every direction becomes less than or equal to the second value, as arrival of the start timing.

### (Supplemental Note 8-6)

The computer program according to Supplemental Note 8-2, allowing the computer to function as the photographing-timing monitor means, wherein the photographing-timing monitor means detects a timing after elapse of a predetermined time from detecting input of the instruction for the camera photographing, as arrival of the start timing.

The present invention has been described with the aforementioned exemplary embodiments as exemplary examples. However, the present invention is not limited to the aforementioned exemplary embodiments. In other words, various embodiments that can be understood by those skilled in the art may be applied to the present invention, within the scope thereof.

This application claims priority based on Japanese Patent Application No. 2013-194995 filed on September 20, 2013, the disclosure of which is hereby incorporated by reference thereto in its entirety.

### [Reference signs List]

- 1A: CPU
- 2A: RAM
- 3A: ROM
- 4A: Display control unit
- 5A: Display
- 6A: Operation acceptance unit
- 7A: Operation unit
- 8A: Acceleration sensor
- 9A: Camera unit
- 10A: Bus
- 10: Electronic device
- 11: Acceleration sensor
- 12: Camera unit
- 13: Photographing-instruction input acceptance unit
- 14: Photographing-timing monitor unit

## Claims

1. An electronic device comprising:
an acceleration sensor;
a camera unit;
photographing-instruction input acceptance means for detecting input of an instruction for camera photographing, in accordance with measurement data obtained from the acceleration sensor; and
photographing-timing monitor means for monitoring arrival of a start timing of the camera photographing that is performed at a predetermined timing after detecting input of the instruction for the camera photographing, wherein
the camera unit performs camera photographing accordingly, when the photographing-timing monitor means determines that the start timing arrives.

2. The electronic device according to Claim 1, wherein
the photographing-instruction input acceptance means detects a first acceleration pattern, including at least a pattern in which acceleration in a predetermined direction exceeds a first value, as the instruction for the camera photographing.

3. The electronic device according to Claim 2, wherein
the photographing-timing monitor means detects arrival of the start timing of the camera photographing, in accordance with measurement data obtained from the acceleration sensor.

4. The electronic device according to Claim 3, wherein
the photographing-timing monitor means detects a second acceleration pattern, including at least a pattern in which acceleration in a predetermined direction becomes less than or equal to a second value, as arrival of the start timing.

5. The electronic device according to Claim 4, wherein
the photographing-timing monitor means detects the second acceleration pattern, including at least a pattern in which acceleration in every direction becomes less than or equal to the second value, as arrival of the start timing.

6. The electronic device according to Claim 2, wherein
the photographing-timing monitor means detects a timing after elapse of a predetermined time from detecting input of the instruction for the camera photographing, as arrival of the start timing.

7. A method for controlling an electronic device including an acceleration sensor and a camera unit, by a computer of the electronic device, the method comprising:
detecting input of an instruction for camera photographing, in accordance with measurement data obtained from the acceleration sensor;
monitoring arrival of a start timing of the camera photographing performed at a predetermined timing after detecting input of the instruction for the camera photographing; and
performing camera photographing accordingly, on determining that the start timing arrives, in the monitoring arrival of the start timing.

8. A computer-readable storage medium storing a program for a computer of an electronic device including an acceleration sensor and a camera unit, the program causing the computer to execute:
processing of detecting input of an instruction for camera photographing, in accordance with measurement data obtained from the acceleration sensor;
processing of monitoring arrival of a start timing of the camera photographing performed at a predetermined timing after detecting input of the instruction for the camera photographing; and
processing of performing camera photographing accordingly, on determining that the start timing arrives, in the processing of monitoring arrival of the start timing.

9. The electronic device according to Claim 2, wherein
the photographing-instruction input acceptance means detects the first acceleration pattern, including at least a pattern in which acceleration in a predetermined direction increases to the first value, as the instruction for the camera photographing.

10. The electronic device according to Claim 4, wherein
the photographing-timing monitor means detects the second acceleration pattern, including at least a pattern in which acceleration in a predetermined direction decreases to the second value, as arrival of the start timing.
